# EUROPÄISCHE PATENTSCHRIFT

(11) **EP 0 994 124 B1**
(45) Veröffentlichungstag und Bekanntmachung des Hinweises auf die Patenterteilung: **23.03.2005**
(21) Anmeldenummer: 99119064.6
(22) Anmeldetag: 30.09.1999
(51) Int. Cl.: C08F 2/18

(54) **Verfahren zur Herstellung mikroverkapselter kugelförmiger Polymerisate**
Process for preparing microencapsulated spherical polymers
Procédé de préparation de polymères sphériques microencapsulés

(30) Priorität: 13.10.1998 DE 19847050
(43) Veröffentlichungstag der Anmeldung: 19.04.2000
(73) Patentinhaber: Bayer Chemicals AG, 51368 Leverkusen (DE)
(72) Erfinder: Halle, Olaf, Dr., 51061 Köln (DE); Strüver, Werner, Dr., 51375 Leverkusen (DE)

(56) Entgegenhaltungen:
- EP-A- 0 046 535
- EP-A- 0 051 210
- EP-A- 0 842 951
- US-A- 4 259 465

## Beschreibung

Die Erfindung betrifft ein Verfahren zur Herstellung von mikroverkapselten kugelförmigen Polymerisaten durch Polymerisation einer Mischung von in wäßriger Phase suspendierten mikroverkapselten initiatorhaltigen Tröpfchen aus hydrophobem Monomer und der wäßrigen Phase zugesetztem hydrophilem Monomer.

In jüngerer Zeit haben Ionenaustauscher mit möglichst einheitlicher Teilchengröße (im folgenden "monodispers" genannt) zunehmend an Bedeutung gewonnen, weil bei vielen Anwendungen aufgrund der günstigeren hydrodynamischen Eigenschaften eines Austauscherbettes aus monodispersen Ionenaustauschern wirtschaftliche Vorteile erzielt werden können, vgl. EP-A-0 046 535 und EP-A-0 051 210

. Monodisperse Ionenaustauscher können durch Funktionalisieren von monodispersen Perlpolymerisaten erhalten werden. Eine der Möglichkeiten, monodisperse Perlpolymerisate herzustellen besteht darin, durch spezielle Verdüsungstechniken monodisperse Monomertröpfchen zu erzeugen und diese dann durch Polymerisation auszuhärten. Die Ausbildung einheitlicher Tröpfchen kann durch Schwingungsanregung unterstüzt werden; so wird in der EP-A 0 051 210 ein Verfahren zur Herstellung kugelförmiger Teilchen mit einheitlicher Teilchengröße beschrieben, bei dem einheitliche Monomertröpfchen durch Schwingungsanregung eines laminaren Monomerstroms erzeugt werden. Soll die Monodispersität der Monomertröpfchen bei der Polymerisation erhalten bleiben, so muß die Agglomeration und Koaleszenz sowie die Neubildung von Tröpfchen sicher ausgeschlossen werden. Eine besonders wirksame Methode zur Verhinderung von Koaleszenz und Neubildung von Tröpfchen besteht in der Mikroverkapselung der Tröpfchen gemäß EP-A-0 046 535.

Oftmals ist es für die Eigenschaften der Perlpolymerisate vorteilhaft, wenn neben hydrophoben Monomeren auch hydrophile, gut wasserlösliche Monomere eingesetzt werden. Nachteilig an dem oben genannten Stand der Technik ist, daß dort das gesamte Monomer mikroverkapselt wird. Bei dieser Verfahrensweise kann ein Teil des wasserlöslichen Monomers aus der Mikrokapsel in die wäßrige Phase übertreten. Wird die wäßrige Phase beispielsweise durch eine Gegenstromwäsche ausgetauscht, so wird hierbei auch das wasserlösliche Monomer teilweise entfernt.

Die Aufgabe der vorliegenden Erfindung bestand folglich darin, mikroverkapselte Copolymerisate sowohl aus hydrophobem als auch hydrophilem, gut wasserlöslichem Monomer herzustellen. Es wurde nun gefunden, daß man mikroverkapselte Copolymerisate aus hydrophobem und hydrophilem Monomer erhält, wenn man in wäßriger Phase suspendiertes, mikroverkapseltes hydrophobes Monomer unter Zusatz von hydrophilem Monomer zur wäßrigen Phase polymerisiert.

Gegenstand der Erfindung ist also ein Verfahren zur Herstellung von mikroverkapselten Copolymerisaten aus hydrophobem und hydrophilem Monomer, dadurch gekennzeichnet, daß in wäßriger Phase suspendiertes, mikroverkapseltes hydrophobes Monomer unter Zusatz von hydrophilem Monomer zur wäßrigen Phase polymerisiert wird.

Unter Monomer im Sinne der Erfindung werden monoethylenisch ungesättigte Verbindungen und multiethylenisch ungesättigte Verbindungen, die in der Regel als Vernetzer wirken, sowie deren Mischungen, verstanden. Als hydrophobes Monomer im Sinne der Erfindung wird Monomer verstanden, welches in wäßriger Phase eine weitere Phase ausbildet und in Wasser bei 25°C eine Löslichkeit < 2 Gew.-% besitzt. Beispiele für hydrophobe monoethylenisch ungesättigte Verbindungen sind Styrol, Vinyltoluol, Ethylstyrol, alpha-Methylstyrol, Chlorstyrol, Chlormethylstyrol, Acrylsäurealkylester und Methacrylsäurealkylester. Bevorzugt sind Styrol sowie Mischungen aus Styrol und den vorgenannten Monomeren. Beispiele für hydrophobe multifunktionelle ethylenisch ungesättigte Verbindungen sind Divinylbenzol, Divinyltoluol, Trivinylbenzol, Divinylnaphtalin, Trivinylnaphtalin, 1,7-Octadien, 1,5-Hexadien, Ethylenglycoldimethacrylat, Trimethylolpropantrimethacrylat und Allylmethacrylat.

Als hydrophiles Monomer im Sinne der Erfindung wird Monomer verstanden, dessen Löslichkeit in Wasser bei 25°C mindestens 2 Gew.-% beträgt. Beispiele für hydrophile monoethylenisch ungesättigte Verbindungen sind Acrylsäure, Methacrylsäure, Acrylnitril, Methacrylnitril, Acrylamid, Methacrylamid, Acrylsäurehydroxyalkylester, Acrylsäurealkoxyalkylester und Acrylsäureaminoalkoxyalkylester, Methacrylsäurehydroxyalkylester, Methacrylsäurealkoxyalkylester und Methacrylsäureaminoalkoxyalkylester sowie am Stickstoff substituierte Derivate des Acrylamids oder Methacrylamids wie beispielsweise N-Methoxymethylmethacrylamid. Bevorzugt sind Acrylnitril, Methacrylamid sowie am Stickstoff substituierte Derivate des Methacrylamids. Ein Beispiel für eine hydrophile multifunktionelle ethylenisch ungesättigte Verbindung ist Glycerindiacrylat.

Die monoethylenisch ungesättigten Verbindungen werden im allgemeinen in Mengen von 0,05-20 Gew.-%, vorzugsweise 0,1-10 Gew.-%, besonders bevorzugt 0,2-5 Gew.-%, bezogen auf die Mischung aus hydrophobem und hydrophilem Monomer eingesetzt. Die Art der multiethylenisch ungesättigten Verbindung (Vernetzer) wird im Hinblick auf die spätere Verwendung des kugelförmigen Polymerisats ausgewählt. So sind beispielsweise Acrylat- bzw. Methacrylat-Vernetzer ungeeignet, wenn aus dem Polymerisat ein Kationenaustauscher durch Sulfonierung hergestellt werden soll, da die Esterbindung unter den Sulfonierungsbedingungen gespalten wird. Divinylbenzol ist in vielen Fällen, insbesondere auch zur Herstellung stark saurer Kationenaustauscher, geeignet. Für die meisten Anwendungen sind kommerzielle Divinylbenzolqualitäten, die neben den Isomeren des Divinylbenzols auch Ethylvinylbenzol enthalten, ausreichend.

Der Zusatz des hydrophilen Monomers kann in verschiedener Weise erfolgen. So ist es beispielsweise möglich, das hydrophile Monomer in dem Reaktionskessel vorzulegen und diesen anschließend mit in wäßriger Phase dispergierten mikroverkapselten Monomertröpfchen aufzufüllen. Ebenfalls ist es möglich, zunächst die in wäßriger Phase dispergierten mikroverkapselten Monomertröpfchen vorzulegen und das hydrophile Monomer zuzusetzen. Eine gleichzeitige Zuführung von hydrophilem Monomer und dispergierten mikroverkapselten Monomertröpfchen ist ebenfalls möglich. Das hydrophile Monomer kann wahlweise auch als Lösung in Wasser oder wäßriger Phase eingesetzt werden. Bevorzugt ist der Zusatz von hydrophilem Monomer zu den in wäßriger Phase dispergierten mikroverkapselten Monomertröpfchen, besonders bevorzugt ist der Zusatz von hydrophilem Monomer in bevorzugter Weise mit einem Wassergehalt < 5 Gew.-%.

Auch der Zeitpunkt des Zusatzes von hydrophilem Monomer kann in weiten Grenzen variiert werden. So ist es beispielsweise möglich, das Monomer vor Beginn der Polymerisation zuzusetzen. Das Monomer kann aber auch während der Polymerisation, wahlweise auch in einem Dosierungsverfahren während einer längeren Zeit, zugesetzt werden. Bevorzugt ist die Zugabe des Monomers vor Beginn der Polymerisation.

Für die Mikroverkapselung der Monomertröpfchen kommen die für diesen Einsatzzweck bekannten Materialien in Frage, insbesondere Polyester, natürliche und synthetische Polyamide, Polyurethane, Polyharnstoffe. Als natürliches Polyamid ist Gelatine besonders gut geeignet. Diese kommt insbesondere als Koazervat und Komplexkoazervat zur Anwendung. Unter gelatinehaltigen Komplexkoazervaten im Sinne der Erfindung werden vor allem Kombinationen von Gelatine und synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP-A-0 046 535 eingehend beschrieben. Die Methoden der Verkapselung mit synthetischen Polymeren sind bekannt. Gut geeignet ist beispielsweise die Phasengrenzflächenkondensation, bei der eine im Monomertröpfchen gelöste Reaktivkomponente (beispielsweise ein Isocyanat oder ein Säurechlorid) mit einer zweiten, in der wäßrige Phase gelösten Reaktivkomponente (beispielsweise einem Amin), zur Reaktion gebracht wird.

Die verkapselten Monomertröpfchen enthalten Initiatoren zur Auslösung der Polymerisation. Für das erfindungsgemäße Verfahren geeignete Initiatoren sind beispielsweise Peroxyverbindungen wie Dibenzoylperoxid, Dilaurylperoxid, Bis (p-chlorbenzoylperoxid), Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan und tert.-Amylperoxy-2-etylhexan, desweiteren Azoverbindungen wie 2,2'-Azobis(isobutyronitril) und 2,2'-Azobis(2-methylisobutyronitril).

Auch das hydrophile Monomer kann Initiator enthalten. Hierfür sind die obengenannten Initiatoren ebenfalls geeignet. Bevorzugt ist der Zusatz von initiatorfreiem hydrophilem Monomer.

Die Initiatoren werden im allgemeinen in Mengen von 0,05 bis 2,5 Gew.-%, vorzugsweise 0,1 bis 1,5 Gew.-%, bezogen auf die Mischung aus hydrophilem und hydrophobem Monomer, angewendet.

Als weitere Zusätze in den mikroverkapselten Monomertröpfchen können sogenannte Porogene verwendet werden, um im kugelförmigen Polymerisat eine makroporöse Struktur zu erzeugen. Hierfür sind organische Lösungsmittel geeignet, die das gebildete Polymerisat schlecht lösen bzw. quellen. Beispielhaft seien genannt Hexan, Octan, Isooctan, Isododecan, Methylethylketon, Methylisobutylketon, Methylisobutylcarbinol und Octanol.

Das mikroverkapselte Monomertröpfchen kann auch bis zu 30 Gew.-% (bezogen auf das Monomer) vernetztes oder unvernetztes Polymer enthalten. Bevorzugte Polymere leiten sich aus den vorgenannten Monomeren, besonders bevorzugt von Styrol, ab.

Die mittlere Teichengröße der verkapselten Monomertröpfchen beträgt 10 bis 1000 µm, vorzugsweise 100 bis 1000 µm. Das erfindungsgemäße Verfahren ist auch zur Herstellung monodisperser kugelförmiger Polymerisate gut geeignet.

Die wäßrige Phase kann einen gelösten Polymerisationsinhibitor enthalten. Als Inhibitoren kommen sowohl anorganische als auch organische Stoffe in Frage. Beispiele für anorganische Inhibitoren sind Stickstoffverbindungen wie Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere geeignete organische Inhibitoren sind stickstoffhaltige Verbindungen. Hierzu gehören Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate wie beispielsweise N,N-Hydrazinodiessigsäure, Nitrosoverbindungen wie beispielsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors beträgt 5 - 1000 ppm (bezogen auf die wäßrige Phase), vorzugsweise 10 - 500 ppm, besonders bevorzugt 10 - 250 ppm.

Die Polymerisation der verkapselten Monomertröpfchen zum kugelförmigen Polymerisat erfolgt zweckmäßigerweise in Anwesenheit eines oder mehrerer Schutzkolloide und gegebenenfalls eines Puffersystems in der wäßrigen Phase. Als Schutzkolloide eignen sich natürliche und synthetische wasserlösliche Polymere, wie beispielsweise Gelatine, Stärke, Polyvinylalkohol, Polyvinylpyrrolidon, Polyacrylsäure, Polymethacrylsäure und Copolymerisate aus (Meth)acrylsäure und (Meth)acrylsäureester. Sehr gut geeignet sind auch Cellulosederivate, insbesondere Celluloseester und Celluloseether, wie Carboxymethylcellulose, Methylhydroxyethylcellulose, Methylhydroxypropylcellulose und Hydroxyethylcellulose. Besonders gut geeignet ist Gelatine. Die Einsatzmenge der Schutzkolloide beträgt im allgemeinen 0,05 bis 1 Gew.-% bezogen auf die wäßrige Phase, vorzugsweise 0,05 bis 0,5 Gew.-%.

Die Polymerisation kann in Anwesenheit eines Puffersystem durchgeführt werden. Bevorzugt werden Puffersysteme, die den pH-Wert der wäßrigen Phase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflußt. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration an Phoshat bzw. Borat in der wäßrigen Phase beträgt 0,5 bis 500 mmol/l, vorzugsweise 2,5 bis 100 mmol/l.

Die Rührgeschwindigkeit bei der Polymerisation ist wenig kritisch und hat im Gegensatz zur herkömmlichen Perlpolymerisation keinen Einfluß auf die Teilchengröße. Es werden niedrige Rührgeschwindigkeiten angewendet, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zur wäßrigen Phase beträgt 1 : 0,75 bis 1 : 20, vorzugsweise 1 : 1 bis 1 : 6.

Die Polymerisationstemperatur richtet sich nach der Zerfallstemperatur des eingesetzten Initiators. Sie liegt im allgemeinen zwischen 50 bis 150°C, vorzugsweise zwischen 55 und 100°C. Die Polymerisation dauert 0,5 bis einige Stunden. Es hat sich bewährt, ein Temperaturprogramm anzuwenden, bei dem die Polymerisation bei niedriger Temperatur, z.B. 60°C begonnen wird und mit fortschreitendem Polymerisationsumsatz die Reaktionstemperatur gesteigert wird. Auf diese Weise läßt sich beispielsweise die Forderung nach sicherem Reaktionsverlauf und hohem Polymerisationsumsatz sehr gut erfüllen. Nach der Polymerisation wird das Polymerisat mit üblichen Methoden, beispielsweise durch Filtrieren oder Dekantieren, isoliert und gegebenenfalls gewaschen.

Die erfindungsgemäß hergestellten mikroverkapselten Copolymerisate sind sowohl aus hydrophobem als auch aus hydrophilem Monomer aufgebaut. Dies ist daher überraschend, da das hydrophile Monomer nicht durch die Mikroverkapselung vom hydrophoben Monomertropfen getrennt bleibt, sondern die den hydrophoben Monomertropfen umgebende Kapselwand durchdringt und erst im Tropfen copolymerisiert.

### Beispiele

### Beispiel 1 (erfindungsgemäß)

In einem 10 l Glasreaktor werden 3000 g entionisiertes Wasser vorgelegt und eine Lösung aus 10 g Gelatine, 16 g Natriumhydrogenphosphatdodekahydrat und 0,73 g Resorcin in 320 g entionisiertem Wasser hinzugefüllt und durchmischt.

Unter Rühren wird anschließend eine Mischung aus 3200 g von mikroverkapselten Monomertröpfchen mit enger Teilchengrößenverteilung aus 10,4 Gew.-% Divinylbenzol und 2,6 Gew.-% Ethylstyrol (eingesetzt als handelsübliches Isomerengemisch aus Divinylbenzol und Ethylstyrol mit 80 Gew.-% Divinylbenzol), 0,75 Gew.-% Dibenzoylperoxid und 86,25 Gew.-% Styrol, wobei die Mikrokapsel aus einem mit Formaldehyd gehärteten Komplexkoazervat aus Gelatine und einem Copolymer aus Acrylamid und Acrylsäure besteht, und 3200 g wäßriger Phase mit einem pH-Wert von 12 zugesetzt. Die mittlere Teilchengröße der Monomertöpfchen beträgt 430 µm.

Unter Rühren werden dem Ansatz 136 g Acrylnitril zugesetzt.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 µm-Sieb gewaschen und anschließend getrocknet. Man erhält 3250 g eines kugelförmigen Polymerisates mit einer mittleren Teilchengröße von 410 µm, enger Teilchengrößenverteilung und glatter Oberfläche. Der Stickstoffgehalt beträgt 0,9 Gew.-%.

### Beispiel 2 (erfindungsgemäß)

In einem 4 l Glasreaktor werden 1185 entionisiertes Wasser vorgelegt und eine Lösung aus 2,4 g Gelatine und 4 g Natriumhydrogenphosphatdodekahydrat in 80 g entionisiertem Wasser sowie 12,8 g Acrylnitril hinzugefüllt und durchmischt. Unter Rühren wird anschließend eine Mischung aus 640 g mikroverkapselten Monomertröpfchen mit enger Teilchengrößenverteilung aus 0,5 Gew.-% Divinylbenzol und 0,3 Gew.-% Ethylstyrol (eingesetzt als handelsübliches Isomerengemisch aus Divinylbenzol und Ethylstyrol mit 63 Gew.-% Divinylbenzol), 0,75 Gew.-% Dibenzoylperoxid und 98,45 Gew.-% Styrol gegeben, wobei die Mikrokapsel aus einem mit Formaldehyd gehärteten Komplexkoazervat aus Gelatine und einem Copolymer aus Acrylamid und Acrylsäure besteht, und 790 g wäßriger Phase mit einem pH-Wert von 12, enthaltend 0,065 Gew.-% Formaldehyd und Natronlauge. Die mittlere Teilchengröße beträgt 231 µm. Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 µm-Sieb gewaschen und anschließend getrocknet. Man erhält 620 g eines kugelförmigen Polymerisates mit einer mittleren Teilchengröße von 220 µm, enger Teilchengrößenverteilung und glatter Oberfläche. Der Stickstoffgehalt beträgt 0,5 Gew.-%

### Beispiel 3 (erfindungsgemäß)

In einem 10 l Glasreaktor werden 3000 g entionisiertes Wasser vorgelegt und eine Lösung aus 10 g Gelatine und 16 g Natriumhydrogenphosphatdodecahydrat in 320 g entionisiertem Wasser hinzugefüllt und durchmischt.

Unter Rühren wird anschließend eine Mischung aus mikroverkapselten Monomertröpfchen mit enger Teilchengrößenverteilung aus 112 g handelsüblichem Isomerengemisch aus Divinylbenzol und Ethylstyrol mit 80 Gew.-% Divinylbenzol, 1008 g Styrol, 896 g Isododekan und 9,6 g Dibenzoylperoxid mit einem Gehalt von 75 Gew.-%, wobei die Mikrokapsel aus einem mit Formaldehyd gehärteten Komplexkoazervat aus Gelatine und einem Copolymer aus Acrylamid und Acrylsäure besteht, und 4000 g wäßriger Phase mit einem pH-Wert von 12 zugesetzt. Die mittlere Teilchengröße der Monomertöpfchen beträgt 220 µm.

Unter Rühren werden dem Ansatz 56 g N-Methoxymethylmethacrylamid zugesetzt.

Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 µm-Sieb gewaschen und anschließend getrocknet. Man erhält 1065 g eines kugelförmigen Polymerisates mit einer mittleren Teilchengröße von 210 µm, enger Teilchengrößenverteilung und glatter Oberfläche. Der Stickstoffgehalt beträgt 0,34 Gew.-%.

## Patentansprüche

1. Verfahren zur Herstellung von mikroverkapselten Copolymerisaten aus hydrophobem und hydrophilem Monomer, **dadurch gekennzeichnet, daß** in wäßriger Phase suspendiertes, mikroverkapseltes hydrophobes Monomer unter Zusatz von hydrophilem Monomer zur wäßrigen Phase polymerisiert wird.

2. Verfahren gemäß Anspruch 1, **dadurch gekennzeichnet, daß** als hydrophobe Monomere monoethylenisch ungesättigte Verbindungen eingesetzt werden, deren Löslichkeit in Wasser bei 25°C <2 Gew.-% beträgt.

3. Verfahren gemäß Anspruch 1, **dadurch gekennzeichnet, daß** als hydrophile Monomere monoethylenisch ungesättigte Verbindungen eingesetzt werden, deren Löslichkeit in Wasser bei 25°C mindestens 2 Gew.-% beträgt

4. Verfahren gemäß Anspruch 2, **dadurch gekennzeichnet, daß** als hydrophobe Monomere Styrol, Vinyltoluol, Ethylstyrol, alpha-Methylstyrol, Chlorstyrol, Chlormethylstyrol, Acrylsäurealkylester und Methacrylsäurealkylester eingesetzt werden.

5. Verfahren gemäß Anspruch 3, **dadurch gekennzeichnet, daß** als hydrophile Monomere Acrylsäure, Methacrylsäure, Acrylnitril, Methacrylamid, Acrylsäurehydroxyalkylester, Acrylsäurealkoxyalkylester, Acrylsäureaminoalkoxyalkylester, Methacrylsäurehydroxyalkylester, Methacrylsäurealkoxyalkylester und Methacrylsäureaminoalkoxyalkylester sowie am Stickstoff substituierte Derivate des Acrylamids oder Methacrylamids wie beispielsweise N-Methoxymethylmethacrylamid eingesetzt werden.

6. Verfahren gemäß Anspruch 1, **dadurch gekennzeichnet, daß** die monoethylenisch ungesättigten Verbindungen in Mengen von 0,05 bis 20 Gew.-%, bezogen auf die Mischung aus hydrophobem und hydrophilem Monomer eingesetzt werden.

7. Verfahren gemäß Anspruch 1, **dadurch gekennzeichnet, daß** Initiatoren der Reihe Dibenzoylperoxid, Dilaurylperoxid, Bis (p-chlorbenzoylperoxid), Dicyclohexylperoxydicarbonat, tert.-Butylperoctoat, tert.-Butylperoxy-2-ethylhexanoat, 2,5-Bis(2-ethylhexanoylperoxy)-2,5-dimethylhexan, tert.-Amylperoxy-2-etylhexan, 2,2'-Azobis(isobutyronitril) und 2,2'-Azobis(2-methylisobutyronitril) eingesetzt werden.

8. Verfahren gemäß Anspruch 1, **dadurch gekennzeichnet, daß** zusätzlich Porogene der Reihe Hexan, Octan, Isooctan, Isododecan, Methylethylketon, Methylisobutylketon, Methylisobutylcarbinol und Octanol eingesetzt werden.

9. Verfahren gemäß Anspruch 1, **dadurch gekennzeichnet, daß** das mikroverkapselte hydrophobe Monomer bis zu 30 % Polystyrol oder auf Styrol basierendes Copolymer enthält.

## Claims

1. Process for the preparation of microencapsulated copolymers of hydrophobic and hydrophilic monomer, **characterized in that** microencapsulated hydrophobic monomer suspended in an aqueous phase is polymerized with the addition of hydrophilic monomer to the aqueous phase.

2. Process according to Claim 1, **characterized in that** monoethylenically unsaturated compounds whose solubility in water at 25°C is < 2% by weight are used as hydrophobic monomers.

3. Process according to Claim 1, **characterized in that** monoethylenically unsaturated compounds whose solubility in water at 25°C is at least 2% by weight are used as hydrophilic monomers.

4. Process according to Claim 2, **characterized in that** styrene, vinyltoluene, ethylstyrene, alphamethylstyrene, chlorostyrene, chloromethylstyrene, alkyl acrylate and alkyl methacrylate are used as hydrophobic monomers.

5. Process according to Claim 3, **characterized in that** acrylic acid, methacrylic acid, acrylonitrile, methacrylonitrile, hydroxyalkyl acrylate, alkoxyalkyl acrylate, aminoalkoxyalkyl Le A 33 282 acrylate, hydroxyalkyl methacrylate, alkoxyalkyl methacrylate and aminoalkoxyalkyl methacrylate and derivatives of acrylamide or methacrylamide which are substituted on the nitrogen, such as, for example, N-methoxymethylmethacrylamide, are used as hydrophilic monomers.

6. Process according to Claim 1, **characterized in that** the monoethylenically unsaturated compounds are used in amounts of 0.05 to 20% by weight, based on the mixture of hydrophobic and hydrophilic monomer.

7. Process according to Claim 1, **characterized in that** initiators of the series dibenzoyl peroxide, dilauryl peroxide, bis(p-chlorobenzoyl) peroxide, dicyclohexyl peroxydicarbonate, tert-butyl peroctanoate, tert-butyl peroxy-2-ethylhexanoate, 2,5-bis(2-ethylhexanoylperoxy)-2,5-dimethylhexane, tert-amylperoxy-2-ethylhexane, 2,2'-azobis-(isobutyronitrile) and 2,2'-azobis(2-methyl-isobutyronitrile) are used.

8. Process according to Claim 1, **characterized in that** porogens of the series hexane, octane, isooctane, isododecane, methyl ethyl ketone, methyl isobutyl ketone, methylisobutylcarbinol and octanol are additionally used.

9. Process according to Claim 1, **characterized in that** the microencapsulated hydrophobic monomer contains up to 30% of styrene or of copolymer based on styrene.

## Revendications

1. Procédé de fabrication de copolymères microencapsulés constitués d'un monomère hydrophobe et hydrophile, **caractérisé en ce qu'**on polymérise un monomère microencapsulé hydrophobe mis en suspension dans une phase aqueuse en ajoutant un monomère hydrophile à la phase aqueuse.

2. Procédé selon la revendication 1, **caractérisé** en qu'on met en oeuvre, en tant que monomères hydrophobes, des composés monoéthyléniquement insaturés dont la solubilité dans l'eau à 25°C est inférieure à 2 % en poids.

3. Procédé selon la revendication 1, **caractérisé** en qu'on met en oeuvre, en tant que monomères hydrophiles, des composés monoéthyléniquement insaturés dont la solubilité dans l'eau à 25°C est au moins égale à 2 % en poids.

4. Procédé selon la revendication 2, **caractérisé** en qu'on met en oeuvre, en tant que monomères hydrophobes du styrène, du vinyltoluène, de l'éthylstyrène, de l'alpha-méthylstyrène, du chlorostyrène, du chlorométhylstyrène, de l'ester alkylique d'acide acrylique et de l'ester alkylique de l'acide méthacrylique.

5. Procédé selon la revendication 3, **caractérisé** en qu'on met en oeuvre en tant que monomères hydrophiles de l'acide acrylique, de l'acide méthacrylique, de l'acrylonitrile, du méthacrylamide, de l'ester hydroxyalkylique de l'acide acrylique, de l'ester alcoxyalkylique de l'acide acrylique, de l'ester aminoalcoxyalkylique de l'acide acrylique, de l'ester hydroxyalkylique de l'acide méthacrylique, de l'ester alcoxyalkylique de l'acide méthacrylique et de l'ester aminoalcoxyalkylique de l'acide méthacrylique ainsi que des dérivés, substitués sur l'azote, de l'acrylamide ou du méthacrylamide comme, par exemple, le N-méthoxyméthylméthacrylamide.

6. Procédé selon la revendication 1, **caractérisé en ce que** les composés monoéthyléniquement insaturés sont mis en oeuvre dans des quantités de 0,05 à 20 % en poids par rapport au mélange constitué de monomère hydrophobe et hydrophile.

7. Procédé selon la revendication 1, **caractérisé en ce qu'**on met en oeuvre des amorceurs de la série peroxyde de dibenzoyle, peroxyde de dilauryle, bis-(peroxyde de p-chlorobenzoyle), peroxydicarbonate de dicyclohexyle, peroctoate de tert-butyle, peroxy-2-éthyl-hexanoate de tert-butyle, 2,5-bis(2-éthylhexanoylperoxy)-2,5-diméthylhexane, tert-amylperoxy-2-éthylhexane, 2,2'-azobis-isobutyronitrile) et 2,2'-azobis(2-méthilisobutyronitrile).

8. Procédé selon la revendication 1, **caractérisé en ce qu'**on met en plus en oeuvre des porogènes de la série hexane, octane, isooctane, isododécane, méthyléthylcétone, méthylisobutylcétone, méthylisobutylcarbinol et octanol.

9. Procédé selon la revendication 1, **caractérisé en ce que** le monomère microencapsulé hydrophobe contient jusqu'à 30 % de polystyrène ou un copolymère à base de styrène.
